# EUROPEAN PATENT SPECIFICATION

(11) **EP 2 709 861 B1**
(45) Date of publication and mention of the grant of the patent: **13.05.2015**
(21) Application number: 12720892.4
(22) Date of filing: 15.05.2012
(51) Int. Cl.: B60G 15/06, B60G 17/027

(54) **MACPHERSON VEHICLE SUSPENSION COMPRISING A DEVICE FOR ADJUSTING THE HEIGHT OF THE VEHICLE BODY FROM THE GROUND**
MACPHERSON-FAHRZEUGAUFHÄNGUNG MIT EINER VORRICHTUNG ZUR HÖHENVERSTELLUNG DER FAHRZEUGKAROSSERIE VOM BODEN
SUSPENSION DE VÉHICULE MACPHERSON COMPRENANT UN DISPOSITIF POUR RÉGLER LA HAUTEUR DE LA CAISSE DU VÉHICULE À PARTIR DU SOL

(30) Priority: 16.05.2011 IT TO20110434
(43) Date of publication of application: 26.03.2014
(73) Proprietor: Sistemi Sospensioni S.p.A., 20011 Corbetta (MI) (IT)
(72) Inventor: TRINCHERA, Massimo, I-10144 Torino (IT); BRUNO, Walter, I-14100 Asti (IT)
(74) Representative: Rondano, Davide
(86) International application number: PCT/EP2012/059059
(87) International publication number: WO 2012/156418

(56) References cited:
- DE-A1- 10 144 242
- DE-A1-102007 044 538
- US-A1- 2004 159 993
- US-A1- 2004 163 909

## Description

The present invention relates in general to a MacPherson vehicle suspension, and more specifically to a damper and spring unit for a MacPherson vehicle suspension comprising an adjustment device for adjusting, i.e. for changing in a controlled manner, the height of the vehicle body from the ground, as specified in the preamble of independent claim 1.

Such a MacPherson vehicle suspension is known from DE 10 2007 044 538.

The use on vehicle suspensions of adjustment devices for adjusting the height of the vehicle body from the ground is known. Such adjustment devices are used for instance on so-called SUVs (Sport Utility Vehicles), in order to allow the vehicle body to be at a higher level from the ground during off-road driving and at a lower level from the ground during on-road driving, in particular during high-speed driving. Such adjustment devices are also used on sport cars, whose height from the ground is usually reduced to ensure the best driving conditions at high speed, in order to allow to lift the vehicle body from the ground during special manoeuvres, for instance when entering or leaving areas delimited by steep ramps, as well as in order to allow the vehicle to drive on snowy roads or in any other driving condition for which it is preferable to have a higher level from the ground than the normal one.

An adjustment device of the above-identified type is typically made as a linear actuator, in particular as a single-effect hydraulic linear actuator, and is mounted on the suspension of each wheel of the vehicle so as to be vertically interposed either between a top end of the spring of the suspension and the vehicle body to change in a controlled manner the distance between the top end of the spring and the vehicle body, or between a part of the suspension drivingly connected to the wheel-carrier and a bottom end of the spring of the suspension to change in a controlled manner the distance between the axis of the wheel and the bottom end of the spring, and hence between the axis of the wheel and the vehicle body. In this second arrangement, one of the two parts which are movable relative to each other and which form the linear actuator acting as adjustment device is secured to the cylinder of the damper and the other is secured to a bottom plate which bears the bottom end of the spring or directly forms this bottom plate. In case of a hydraulic linear actuator, the first one of the two parts of the actuator mentioned above corresponds to the cylinder, whereas the second one corresponds to the plunger.

A device for adjusting the height of the vehicle body from the ground which is made as a hydraulic linear actuator and is interposed between a part of the suspension drivingly connected to the wheel-carrier and a bottom end of the spring of the suspension has the advantage that it does not increase the vertical size of the suspension, but suffers from the drawback that it cannot be used on MacPherson suspensions for steering wheels, since the two parts of the hydraulic linear actuator, namely the cylinder and the plunger, are free to rotate relative to each other about the axis of the actuator.

It is therefore an object of the present invention to allow the use, on a MacPherson suspension for steering wheel, of an adjustment device for adjusting the height of the vehicle body from the ground, wherein the device is made as a hydraulic linear actuator.

This and other objects are fully achieved according to the invention by virtue of a dampen and spring unit for a MacPherson vehicle suspension provided with an adjustment device for adjusting the height of the vehicle body from the ground having the features set forth in the characterizing part of the enclosed independent claim 1.

Advantageous embodiments of the invention are specified in the dependent claims, the content of which is to be regarded as an integral and integrating part of the following description.

The features and the advantages of the present invention will appear more clearly from the following detailed description, given purely by way of non-limiting example with reference to the appended drawings, in which:
Figure 1 is an axial section view of a damper and spring unit for a MacPherson vehicle suspension provided with an adjustment device for adjusting the height of the vehicle body from the ground according to a preferred embodiment of the present invention;
Figures 2 and 3 are axial section views showing in detail the adjustment device mounted between the damper and the spring of the damper and spring unit of Figure 1, in the position of maximum height and in the position of minimum height of the vehicle body from the ground, respectively; and
Figure 4 is a section view of the adjustment device taken through section line IV-IV of Figure 3.

In the following description and claims, terms such as "upper" and "lower", "vertical" and "horizontal" and the like are to be intended as referred to the normal condition of mounting of the MacPherson suspension on the vehicle. Moreover, the terms "axial" and "longitudinal" are used herein to identify the direction of the axis of the hydraulic jack acting as adjustment device, which axis coincides, in the mounted condition of the adjustment device on a MacPherson suspension, with the axis of the damper, whereas the terms "radial" and "transverse" are used to identify a direction laying in a plane perpendicular to that axis.

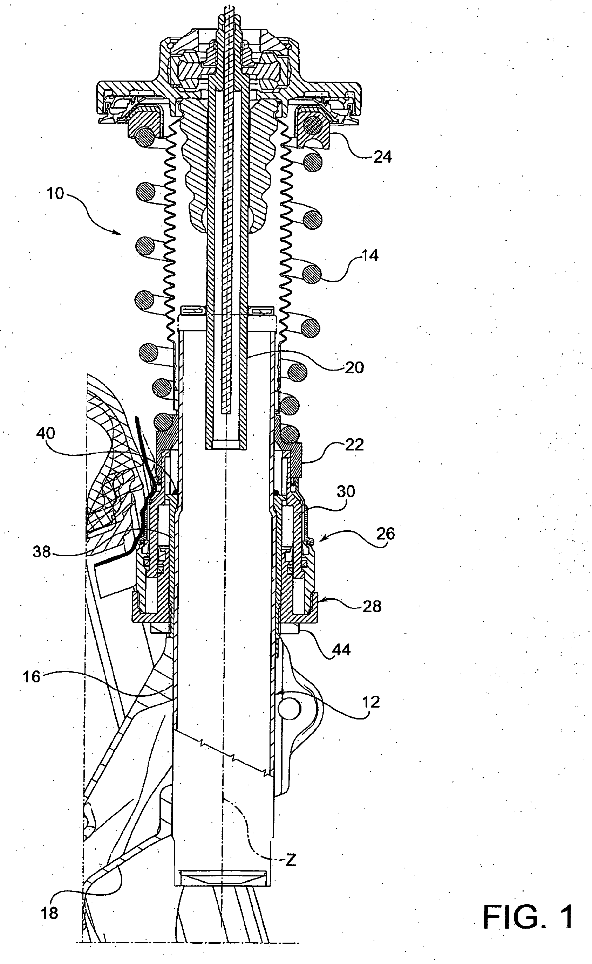

With reference first to Figure 1, a damper and spring unit for a MacPherson suspension for a steering wheel of a vehicle is generally indicated 10 and comprises a damper 12 and a spring 14, both of per-se-known type. The damper 12 comprises a cylinder 16 rigidly connected to a wheel-carrying strut 18 (only partially shown), and a piston which is slidable inside the cylinder 16 and has a rod 20 projecting from the top end of the cylinder 16 and extending coaxially to this latter. The axis of the cylinder 16 is indicated Z and coincides with the direction of the extension and retraction movement of the rod 20 relative to the cylinder 16. The rod 20 is attached at its top end to the vehicle body. The spring 14 is made as a helical spring and is wound about the rod 20 of the damper 12, coaxially thereto. The spring 14 rests at its bottom end against a bottom spring plate 22 and at its top end against a top spring plate 24.

An adjustment device 26 for adjusting the height of the vehicle body from the ground is associated to the damper and spring unit 10. The adjustment device 26 is made as a hydraulic linear actuator and is interposed between the cylinder 16 of the damper 12 and the bottom spring plate 22 so as to allow to adjust the position of the bottom end of the spring 14 (and hence the position of the vehicle body) relative to the cylinder 16 of the damper 12 (and hence relative to the axis of the wheel, i.e. relative to the ground) along the axis Z. The adjustment device 26 basically comprises a cylinder 28 and a plunger 30, which are mounted so as to be drivingly connected for axial translation the one with the cylinder 16 of the damper and the other with the bottom spring plate 22.

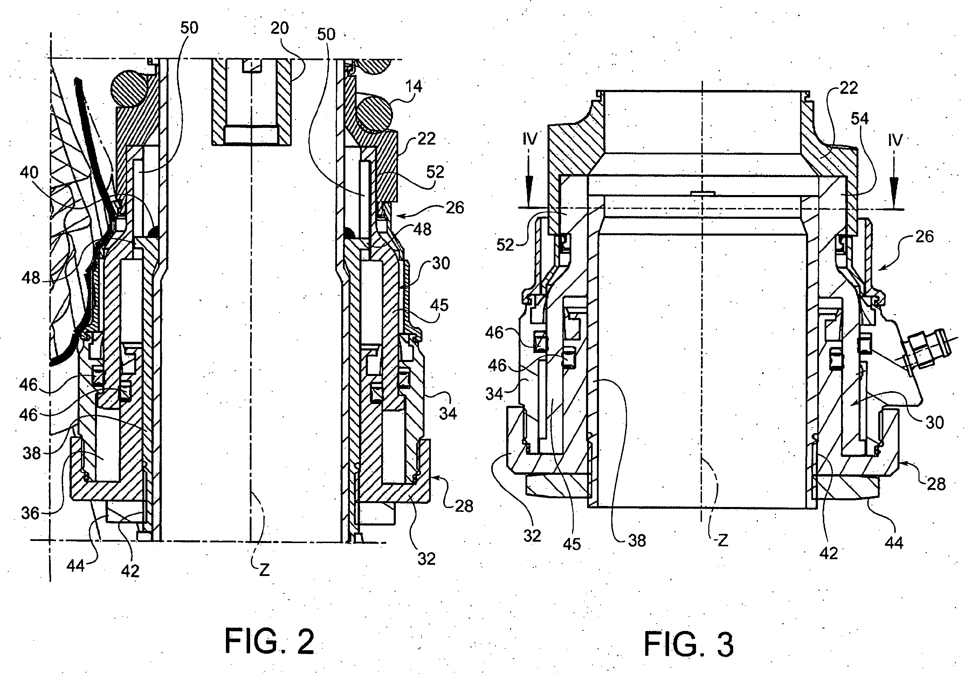

With reference in particular to Figures 2 and 3, the cylinder 28 of the adjustment device 26 comprises an inner cylinder element 32 and an outer cylinder element 34 which are arranged coaxially to each other so as to enclose an annular chamber 36. The annular chamber 36 acts as pressure chamber and for this purpose it is connected, in a manner which is per-se-known and not shown, to a source of fluid under pressure. The inner cylinder element 32 is fitted on a sleeve 38 which is firmly secured to the cylinder 16 of the damper 12, for instance by means of welding 40. The sleeve 38 has an externally threaded lower portion 42 on which a locking nut 44 is screwed. The bottom face of the cylinder 28 of the adjustment device 26, in particular the bottom face of the inner cylinder element 32, rests against the top face of the locking nut 44. The plunger 30 of the adjustment device 26 is made as a hollow cylindrical body and is slidably arranged, with a lower tubular portion 45 thereof, in the annular chamber 36. Seal members 46 of per-se-known type are arranged between the bottom end portion of the plunger 30 and the inner and outer cylinder elements 32 and 34 of the cylinder 28 to ensure tightness of the annular chamber 36. By feeding the annular chamber 36 with fluid under pressure, the plunger 30 is extended (lifted) from the cylinder 28 of the adjustment device 26, and hence both the spring 14 and the vehicle body are lifted. In this connection, Figure 2 shows the adjustment device 26 in the position of maximum extension of the plunger 30, corresponding to the condition of maximum height of the vehicle body from the ground. By discharging the annular chamber 36 of the adjustment device 26, the plunger 30 is retracted (lowered) into the cylinder 28, and hence both the spring 14 and the vehicle body are moved downwards. In this connection, Figure 3 shows the adjustment device 26 in the position of maximum retraction of the plunger 30, corresponding to the condition of minimum height of the vehicle body from the ground.

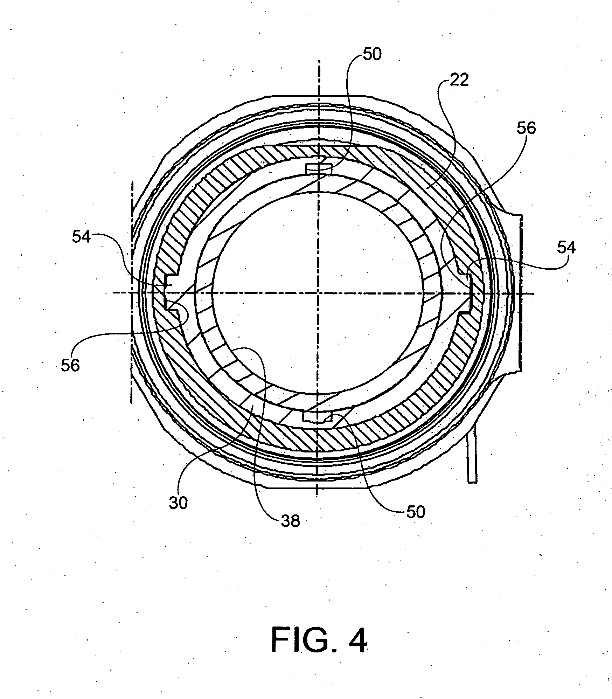

With reference now to Figure 4 as well, according to the invention the plunger 30 of the adjustment device 26 is prevented from rotating relative to the cylinder 28 (i.e. relative to the sleeve 38) of the adjustment device itself, and hence relative to the cylinder 16 of the damper 12, by virtue of anti-rotation means which are advantageously made as guide means adapted to allow the plunger 30 to slide relative to the cylinder 28 (i.e. relative to the sleeve 38). In this connection, in the proposed embodiment these anti-rotation means are formed by a pair of prismatic guides provided on diametrically opposite sides between the plunger 30 and the sleeve 38. More specifically, each guide consists of a radial tooth 48 formed by the sleeve 38, preferably at the top end of this latter, and of a guide groove 50, which extends parallel to the axis Z and is formed on an inner cylindrical surface of the plunger 30 which is always placed outside the cylinder 28. In the illustrated embodiment, the guide groove 50 is formed on the inner cylindrical surface of an upper tubular portion 52 of the plunger 30 on which the top spring plate 24 is mounted. The width of the radial teeth 48 and that of the associated guide grooves 50 are selected so as to allow each radial tooth to slide along the associated guide groove, but to prevent each radial tooth (and hence the plunger 30) from rotating relative to the associated guide groove (and hence relative to the sleeve 38). Naturally, the arrangement of the radial teeth and of the guide grooves could be inverted with respect to the one shown in the drawings, in that the radial teeth could be formed by the plunger 30 and the guide grooves could be formed in the sleeve 38. Moreover, the number of guides could also be different from the one envisaged in the proposed embodiment.

With reference still to Figure 4, anti-rotation means are also provided between the plunger 30 of the adjustment device 26 and the bottom spring plate 22 for preventing these components from rotating relative to each other. More specifically, in the proposed embodiment these anti-rotation means comprise a pair of radial projections 54, which are formed by the plunger 30 and extend radially outwards from diametrically opposite sides, and a pair of recesses 56, which are provided on the inner cylindrical surface of a tubular portion 58 of the bottom spring plate 22 and in each of which a respective radial projection 54 of the plunger 30 engages. Also in this case, the arrangement of the radial projections and of the recesses could be inverted with respect to the one shown in the drawings, in that the radial projections could be formed by the bottom spring plate 22 and the recesses could be formed in the plunger 30. Moreover, the number of radial projections, and hence of recesses, could also be different from the one envisaged in the proposed embodiment. The anti-rotation means arranged to prevent the bottom spring plate 22 from rotating relative to the plunger 30 of the adjustment device 26 can also be made in a way other than the engagement of projections in associated radial recesses.

By virtue of the provision of anti-rotation means between the sleeve 38 and the plunger 30 of the adjustment device 26, as well as between the plunger 30 of the adjustment device 26 and the bottom spring plate 22, the bottom spring plate 22 is prevented from rotating relative to the damper 12. The adjustment device according to the invention can thus be used also on a MacPherson suspension for a steering wheel.

Naturally, the principle of the invention remaining unchanged, the embodiments and the constructional details may vary widely from those described and illustrated purely by way of non-limiting example.

## Claims

1. Damper and spring unit (10) for a MacPherson vehicle suspension, the damper and spring unit (10) comprising a damper (12) and a spring (14),
wherein the damper (12) includes a cylinder (16) intended to be rigidly connected to a wheel-carrying member (18) and a rod (20) projecting from the top end of the cylinder (16) and movable along an axis (Z) of the cylinder (16),
wherein the spring (14) extends coaxially to the rod (20) of the damper (12), and
wherein the damper and spring unit (10) is provided with an adjustment device (16) for adjusting the height of the vehicle from the ground, the adjustment device (26) being made as a hydraulic linear actuator and comprising a cylinder (28) and a plunger (30), and
wherein the adjustment device (26) is interposed between the cylinder (16) of the damper (12) and the spring (14) to change in a controlled manner the linear position of the bottom end of the spring (14) relative to the cylinder (16) of the damper (12) along the axis (Z) of this latter,
**characterized**
**in that** the cylinder (28) of the adjustment device (26) comprises an inner cylindrical element (32) and an outer cylinder element (34) which are arranged coaxially to each other so as to enclose an annular chamber (36) that acts as pressure chamber,
**in that** the adjustment device (26) further comprises a sleeve (38) which is firmly secured to the cylinder (16) of the damper (12) and on which the cylinder (28) of the adjustment device (26) is fitted,
**in that** the adjustment device (26) further comprises first anti-rotation means (48, 50) for preventing relative rotation of the sleeve (38) and of the plunger (30) of the adjustment device (26) about the axis (Z) of the cylinder (16) of the damper (12), and
**in that** said first anti-rotation means (48, 50) are made as guide means adapted to allow the plunger (30) to slide relative to the sleeve (38) of the adjustment device (26) along said axis (Z).

2. Damper and spring unit (10) according to claim 1, wherein said first anti-rotation means (48, 50) comprise at least one prismatic guide between the sleeve (38) and the plunger (30) of the adjustment device (26).

3. Damper and spring unit (10) according to claim 2, wherein said first anti-rotation means (48, 50) comprise a pair of prismatic guides provided on diametrically opposite sides between the sleeve (38) and the plunger (30) of the adjustment device (26).

4. Damper and spring unit (10) according to any of the preceding claims, wherein said guide means (48, 50) comprise at least one radial tooth (48) formed by the sleeve (38) and at least one guide groove (50) extending parallel to said axis (Z), and wherein said at least one radial tooth (48) engages slidably, but non-rotatably, in said at least one guide groove (50) with respect to said axis (Z).

5. Damper and spring unit (10) according to claim 4, wherein the plunger (30) of the adjustment device (26) comprises an upper tubular portion (52) which is arranged outside the cylinder (28) of the adjustment device (26), and wherein said at least one guide groove (50) is formed on the inner cylindrical surface of said upper tubular portion (52).

6. Damper and spring unit (10) according to any of the preceding claims, further comprising a bottom spring plate (22) which is drivingly connected for axial translation with the plunger (30) of the adjustment device (26) and against which the bottom end of the spring (14) rests.

7. Damper and spring unit (10) according to claim 6, further comprising second anti-rotation means (54, 56) for preventing relative rotation of the plunger (30) of the adjustment device (26) and of the bottom spring plate (22) about said axis (Z).

8. Damper and spring unit (10) according to claim 7, wherein said second anti-rotation means (54, 56) comprise at least one radial projection (54) formed by the plunger (30) of the adjustment device (26) or by the bottom spring plate (22) and at least one recess (56) formed on the bottom spring plate (22) or on the plunger (30) of the adjustment device (26), respectively.

9. MacPherson vehicle suspension, comprising a damper and spring unit (10) according to any of the preceding claims.

## Patentansprüche

1. Dämpfer- und Federeinheit (10) für eine MacPherson-Fahrzeugaufhängung, wobei die Dämpfer- und Federeinheit (10) einen Dämpfer (12) und eine Feder (14) aufweist, wobei der Dämpfer (12) einen Zylinder (16), der dazu bestimmt ist, starr mit einem ein Rad tragenden Element (18) verbunden zu werden, und eine Stange (20) besitzt, die vom oberen Ende des Zylinders (16) vorspringt und entlang einer Achse (Z) des Zylinders (16) beweglich ist, wobei die Feder (14) koaxial zur Stange (20) des Dämpfers (12) verläuft und
wobei die Dämpfer- und Federeinheit (10) mit einer Verstellvorrichtung (26) zum Verstellen der Höhe des Fahrzeugs vom Boden versehen ist, wobei die Verstellvorrichtung (26) als ein hydraulischer Linearantrieb ausgeführt ist und einen Zylinder (28) und einen Kolben (30) aufweist,
wobei die Verstellvorrichtung (26) zwischen dem Zylinder (16) des Dämpfers (12) und der Feder (14) angeordnet ist, um die lineare Stellung des unteren Endes der Feder (14) relativ zum Zylinder (16) des Dämpfers (12) entlang der Achse (Z) des Letzteren kontrolliert zu ändern,
**dadurch gekennzeichnet,**
**dass** der Zylinder (28) der Verstellvorrichtung (26) ein inneres zylindrisches Element (32) und ein äußeres Zylinderelement (34) aufweist, die koaxial zueinander angeordnet sind, sodass sie eine ringförmige Kammer (36), die als Druckkammer wirkt, einschließen,
**dass** die Verstellvorrichtung (26) ferner eine Hülse (38) aufweist, die sicher am Zylinder (16) des Dämpfers (12) befestigt ist und an welcher der Zylinder (28) der Verstellvorrichtung (26) angebracht ist,
**dass** die Verstellvorrichtung (26) ferner erste Drehschutzmittel (48, 50) zum Verhindern einer relativen Drehung der Hülse (38) und des Kolbens (30) der Verstellvorrichtung (26) um die Achse (Z) des Zylinders (16) des Dämpfers (12) aufweist und
**dass** die ersten Drehschutzmittel (48, 50) als Führungen ausgeführt sind, die so angepasst sind, dass sie es dem Kolben (30) erlauben, relativ zur Hülse (38) der Verstellvorrichtung (26) entlang der Achse (Z) zu gleiten.

2. Dämpfer- und Federeinheit (10) nach Anspruch 1, wobei die ersten Drehschutzmittel (48, 50) mindestens eine prismatische Führung zwischen der Hülse (38) und dem Kolben (30) der Verstellvorrichtung (26) aufweisen.

3. Dämpfer- und Federeinheit (10) nach Anspruch 2, wobei die ersten Drehschutzmittel (48, 50) ein Paar prismatische Führungen, die auf diametral gegenüberliegenden Seiten zwischen der Hülse (38) und dem Kolben (30) der Verstellvorrichtung (26) vorgesehen sind, aufweisen.

4. Dämpfer- und Federeinheit (10) nach einem der vorangegangenen Ansprüche, wobei die Führungsmittel (48, 50) mindestens einen von der Hülse (38) gebildeten, radialen Zahn (48) und mindestens eine parallel zur Achse (Z) verlaufende Führungsnut (50) aufweisen und wobei der mindestens eine radiale Zahn (48) gleitfähig, aber nicht drehfähig, in die mindestens eine Führungsnut (50) in Bezug auf die Achse (Z) greift.

5. Dämpfer- und Federeinheit (10) nach Anspruch 4, wobei der Kolben (30) der Verstellvorrichtung (26) einen oberen rohrförmigen Abschnitt (52), der außerhalb des Zylinders (28) der Verstellvorrichtung (26) angeordnet ist, aufweist und wobei die mindestens eine Führungsnut (50) auf der inneren zylindrischen Oberfläche des oberen rohrförmigen Abschnitts (52) gebildet wird.

6. Dämpfer- und Federeinheit (10) nach einem der vorangegangenen Ansprüche, ferner eine untere Federplatte (22) aufweisend, die zur axialen Translationsbewegung mit dem Kolben (30) der Verstellvorrichtung (26) antreibend verbunden ist und auf der das untere Ende der Feder (14) ruht.

7. Dämpfer- und Federeinheit (10) nach Anspruch 6, ferner zweite Drehschutzmittel (54, 56) aufweisend, um eine relative Drehung des Kolbens (30) der Verstellvorrichtung (26) und der unteren Federplatte (22) um die Achse (Z) zu verhindern.

8. Dämpfer- und Federeinheit (10) nach Anspruch 7, wobei die zweiten Drehschutzmittel (54, 56) mindestens einen radialen Vorsprung (54), der vom Kolben (30) der Verstellvorrichtung (26) oder von der unteren Federplatte (22) gebildet wird, bzw. mindestens eine Vertiefung (56), die auf der unteren Federplatte (22) oder auf dem Kolben (30) der Verstellvorrichtung (26) gebildet wird, aufweisen.

9. MacPherson-Fahrzeugaufhängung, eine Dämpfer- und Federeinheit (10) nach einem der vorangegangenen Ansprüche aufweisend.

## Revendications

1. Unité amortisseur et ressort (10) pour une suspension de véhicule MacPherson, l'unité amortisseur et ressort (10) comprenant un amortisseur (12) et un ressort (14),
l'amortisseur (12) comprenant un cylindre (16) destiné à être raccordé de manière rigide à un élément de support de roue (18) et une tige (20) faisant saillie à partir de l'extrémité supérieure du cylindre (16) et mobile le long d'un axe (Z) du cylindre (16),
le ressort (14) s'étendant de manière coaxiale vis-à-vis de la tige (20) de l'amortisseur (12), et
l'unité amortisseur et ressort (10) étant dotée d'un dispositif d'ajustement (26) permettant d'ajuster la hauteur du véhicule par rapport au sol, le dispositif d'ajustement (26) étant réalisé sous la forme d'un actionneur linéaire hydraulique et comprenant un cylindre (28) et un piston (30), et
le dispositif d'ajustement (26) étant interposé entre le cylindre (16) de l'amortisseur (12) et le ressort (14) afin de changer, de manière contrôlée, la position linéaire de l'extrémité inférieure du ressort (14) par rapport au cylindre (16) de l'amortisseur (12) le long de l'axe (Z) de ce dernier,
**caractérisée**
**en ce que** le cylindre (28) du dispositif d'ajustement (26) comprend un élément cylindrique intérieur (32) et un élément cylindrique extérieur (34) qui sont agencés de manière coaxiale l'un vis-à-vis de l'autre de façon à définir une chambre annulaire (36) qui sert de chambre de pression,
**en ce que** le dispositif d'ajustement (26) comprend en outre une gaine (38) qui est solidement fixée au cylindre (16) de l'amortisseur (12) et sur laquelle est adapté le cylindre (28) du dispositif d'ajustement (26),
**en ce que** le dispositif d'ajustement (26) comprend en outre des premiers moyens anti-rotation (48, 50) servant à empêcher une rotation relative de la gaine (38) et du piston (30) du dispositif d'ajustement (26) autour de l'axe (Z) du cylindre (16) de l'amortisseur (12), et
**en ce que** lesdits premiers moyens anti-rotation (48, 50) sont réalisés sous la forme de moyens de guidage conçus pour permettre au piston (30) de coulisser par rapport à la gaine (38) du dispositif d'ajustement (26) le long de l'axe (Z).

2. Unité amortisseur et ressort (10) selon la revendication 1, dans laquelle lesdits premiers moyens anti-rotation (48, 50) comprennent au moins un guide prismatique situé entre la gaine (38) et le piston (30) du dispositif d'ajustement (26).

3. Unité amortisseur et ressort (10) selon la revendication 2, dans laquelle lesdits premiers moyens anti-rotation (48, 50) comprennent une paire de guides prismatiques disposés sur des côtés diamétralement opposés entre la gaine (38) et le piston (30) du dispositif d'ajustement (26).

4. Unité amortisseur et ressort (10) selon l'une quelconque des revendications précédentes, dans laquelle lesdits premiers moyens de guidage (48, 50) comprennent au moins un cran radial (48) formé par la gaine (38) et au moins une rainure de guidage (50) s'étendant parallèlement audit axe (Z), et dans laquelle ledit ou lesdits crans radiaux (48) coopèrent à coulissement, mais non à rotation, avec ladite ou lesdites rainures de guidage (50) par rapport audit axe (Z).

5. Unité amortisseur et ressort (10) selon la revendication 4, dans laquelle le piston (30) du dispositif d'ajustement (26) comprend une partie tubulaire supérieure (52) qui est située à l'extérieur du cylindre (28) du dispositif d'ajustement (26), et dans laquelle ladite ou lesdites rainures de guidage (50) sont formées sur la surface cylindrique intérieure de ladite partie tubulaire supérieure (52).

6. Unité amortisseur et ressort (10) selon l'une quelconque des revendications précédentes, comprenant en outre une plaque d'appui du ressort inférieure (22) qui est raccordée de façon à permettre son entraînement en translation axiale avec le piston (30) du dispositif d'ajustement (26) et contre laquelle repose l'extrémité inférieure du ressort (14).

7. Unité amortisseur et ressort (10) selon la revendication 6, comprenant en outre des seconds moyens anti-rotation (54, 56) servant à empêcher une rotation relative du piston (30) du dispositif d'ajustement (26) et de la plaque d'appui du ressort inférieure (22) autour dudit axe (Z).

8. Unité amortisseur et ressort (10) selon la revendication 7, dans laquelle lesdits seconds moyens anti-rotation (54, 56) comprennent au moins une protubérance radiale (54) formée par le piston (30) du dispositif d'ajustement (26) ou par la plaque d'appui du ressort inférieure (22) et au moins une cavité (56) formée respectivement sur la plaque d'appui du ressort inférieure (22) ou sur le piston (30) du dispositif d'ajustement (26).

9. Suspension de véhicule MacPherson, comprenant une unité amortisseur et ressort (10) selon l'une quelconque des revendications précédentes.
